# EUROPÄISCHE PATENTANMELDUNG

(11) **EP 2 911 120 A1**
(43) Veröffentlichungstag der Anmeldung: **26.08.2015**
(21) Anmeldenummer: 15152265.3
(22) Anmeldetag: 23.01.2015
(51) Int. Cl.: G07B 15/06

(54) **Mauterfassungsgerät eines satellitengestützten Mautsystems**

(30) Priorität: 25.02.2014 AT 501402014
(71) Anmelder: Siemens AG Österreich, 1210 Wien (AT)
(72) Erfinder: Mohnl, Thomas, 3430 Tulln (AT); Jatschka, Thomas, 2102 Kleinengersdorf (AT)
(74) Vertreter: Maier, Daniel Oliver

(57) **Zusammenfassung**

Die Erfindung betrifft ein Mauterfassungsgerät (1) eines satellitengestützten Mautsystems, welches als mobiles Gerät ausgebildet und in einem Kraftfahrzeug befestigbar ist und eine Steuerung (4) umfasst. Zudem umfasst das Mauterfassungsgerät (1) einen 3D-Beschleunigungssensor (3), welcher zur Erfassung der Erdbeschleunigung (g) eingerichtet ist, wobei der 3D-Beschleunigungssensor (3) zur Übertragung von Daten mit der Steuerung (4) verbunden ist, wobei die Steuerung (4) eingerichtet ist, um aus den Daten des 3D-Beschleunigungssensors (3) ein Ausgabesignal zu generieren, welches die Lage des Mauterfassungsgeräts (1) in Bezug auf die Richtung der Erdbeschleunigung (g) charakterisiert und wobei die Steuerung (4) mit einer Ausgabeeinheit (5) zum Anzeigen einer bevorzugten Lage des Mauterfassungsgeräts (1) verbunden ist. Die Daten des im Mauterfassungsgerät (1) verbauten 3D-Beschleunigungssensors (3) werden somit zur Ausrichtung des Mauterfassungsgeräts (1) bei der Montage im Fahrzeug herangezogen.

## Beschreibung

Die Erfindung betrifft ein Mauterfassungsgerät eines satellitengestützten Mautsystems, welches als mobiles Gerät ausgebildet und in einem Kraftfahrzeug befestigbar ist und eine Steuerung umfasst. Des Weiteren betrifft die Erfindung ein Verfahren zum Einrichten eines Mauterfassungsgeräts in einem Kraftfahrzeug.

Ein Mauterfassungsgerät, auch "On Board Unit" (OBU) genannt, wird zur Erfassung von Mautgebühren innerhalb eines satellitengestützten Mautsystems genutzt. Dabei ist jedes gebührenpflichtige Fahrzeug mit einem derartigen Gerät ausgestattet. Das Mauterfassungsgerät dient der Positionsbestimmung des Fahrzeugs mittels eines Satellitensystems (Global Navigation Satellite System, kurz GNSS) wie zum Beispiel GPS. Zudem ist das Mauterfassungsgerät zur Kommunikation mit zentralen oder dezentralen Einrichtungen des Mautsystems eingerichtet, beispielsweise mittels Mobilfunkeinrichtungen und/oder DSRC (Dedicated Short Range Communication). Die Ermittlung von Mautgebühren erfolgt mittels bekannter Verfahren.

Um eine optimale Funktion des Mauterfassungsgeräts sicherzustellen, ist die Lage des Mauterfassungsgeräts in einem Kraftfahrzeug von Bedeutung. Zu diesem Zweck wird nach dem Stand der Technik in Montageanleitungen angegeben, wie das Mauterfassungsgerät beispielsweise an der Innenseite einer Frontscheibe des Kraftfahrzeugs zu befestigen ist. Ein Gehäuse des Mauterfassungsgeräts bietet in der Regel Anhaltspunkte, um das Mauterfassungsgerät auszurichteten. Eine entsprechende Vorgabe laut zum Beispiel, dass eine Unterkante des Gehäuses parallel zur Unterkante der Frontscheibe des Kraftfahrzeugs verlaufen soll. Derartige Vorgaben werden im praktischen Umgang mit mobilen Mauterfassungsgeräten oftmals missachtet, wodurch es zu einer falschen Einbaulage kommt. In weiterer Folge ist die Funktion des Mauterfassungsgeräts beeinträchtigt.

Der Erfindung liegt die Aufgabe zugrunde, für ein Mauterfassungsgerät der eingangs genannten Art eine Verbesserung gegenüber dem Stand der Technik anzugeben.

Erfindungsgemäß wird diese Aufgabe gelöst durch ein Mauterfassungsgerät gemäß Anspruch 1 und ein Verfahren gemäß Anspruch 8. Verbesserungen finden sich in abhängigen Ansprüchen.

Dabei umfasst das Mauterfassungsgerät einen 3D-Beschleunigungssensor, welcher zur Erfassung der Erdbeschleunigung eingerichtet ist, wobei der 3D-Beschleunigungssensor zur Übertragung von Daten mit der Steuerung verbunden ist, wobei die Steuerung eingerichtet ist, um aus den Daten des 3D-Beschleunigungssensors ein Ausgabesignal zu generieren, welches die Lage des Mauterfassungsgeräts in Bezug auf die Richtung der Erdbeschleunigung charakterisiert und wobei die Steuerung mit einer Ausgabeeinheit zum Anzeigen einer bevorzugten Lage des Mauterfassungsgeräts verbunden ist. Die Daten des im Mauterfassungsgerät verbauten 3D-Beschleunigungssensors werden somit zur Ausrichtung des Mauterfassungsgeräts bei der Montage im Fahrzeug herangezogen. Dabei ist der 3D-Beschleunigungssensor auch für andere Zwecke nutzbar, zum Beispiel für eine genauere Positionsbestimmung des Kraftfahrzeugs im Straßennetz.

In einer vorteilhaften Ausprägung ist die bevorzugte Lage des Mauterfassungsgeräts durch die Position einer in dem Mauterfassungsgerät eingebauten Antenne bestimmt. Auf diese Weise ist sichergestellt, dass dem Nutzer angezeigt wird, wenn sich die Antenne in einer für den Empfang von Satellitensignalen ungünstigen Position befindet.

Bei der Antenne handelt es sich vorzugsweise um eine DSRC-Antenne. Deren Lage ist kritisch in Bezug auf die Empfangs- bzw. Sendequalität.

Günstigerweise ist die Antenne dabei eine zirkular polarisierte Patchantenne.

Eine erweiterte Ausprägung der Erfindung sieht vor, dass die bevorzugte Lage des Mauterfassungsgeräts zudem durch die Position einer weiteren in dem Mauterfassungsgerät eingebauten Antenne bestimmt ist. Dabei handelt es sich beispielsweise um eine GSNN-Antenne, die zusätzlich zu einer DSRC-Antenne angeordnet ist. Die Ausrichtung des Mauterfassungsgeräts erfolgt dann anhand der Lage beider Antennen, die in aufeinander abgestimmten Positionen innerhalb des Mauterfassungsgeräts befestigt sind.

Des Weiteren ist es von Vorteil, wenn das Mauterfassungsgerät ein Befestigungselement umfasst, mittels dessen das Mauterfassungsgerät lösbar an einer Frontscheibe des Kraftfahrzeugs befestigbar ist. Bei einem solchen Mauterfassungsgerät, welches zur mobilen Nutzung in verschiedenen Kraftfahrzeugen vorgesehen ist, erweist sich die Anzeige der bevorzugten Lage als besonders nützlich. Die richtige Anbringung an der Frontscheibe ist dann rasch und auf einfache Weise durchführbar. Dabei ist vorteilhafterweise das Befestigungselement als Saugnapf ausgebildet. Damit ist an der Frontscheibe eine sichere und einfach lösbare Anbringung des Mauterfassungsgeräts gewährleistet. Alternativ dazu sind eine lösbare Klebeverbindung oder sonstige lösbare Verbindungen wie Klettverbindungen einsetzbar.

Eine weitere Verbesserung sieht vor, dass ein mit dem Mauterfassungsgerät fix verbundenes orthogonales Koordinatensystem festgelegt ist und dass der 3D-Beschleunigungssensor der Steuerung Daten dieses Koordinatensystems in Bezug auf die Erdbeschleunigung übermittelt. Auf diese Weise ist eine einfache Bestimmung der Lage des Mauterfassungsgeräts gegeben.

Dabei ist es günstig, wenn eine Achse des orthogonalen Koordinatensystems bei bevorzugter Lage des Mauterfassungsgeräts orthogonal zur Richtung der Erdbeschleunigung ausgerichtet ist.

Das erfindungsgemäße Verfahren zum Einrichten des vorgenannten Mauterfassungsgeräts sieht vor, dass mittels des 3D-Beschleunigungssensors Lagedaten des Mauterfassungsgeräts in Bezug auf die Richtung der Erdbeschleunigung an die Steuerung übermittelt werden und dass mittels Ausgabeeinheit ein Ausgabesignal ausgegeben wird, anhand dem die Lage des Mauterfassungsgeräts in Bezug auf die Richtung der Erdbeschleunigung erkennbar ist. Dann zeigt das Ausgabesignal einem Benutzer an, ob sich das Mauterfassungsgerät in einer bevorzugten Lageposition in Bezug auf die Richtung der Erdbeschleunigung befindet.

Dabei ist es von Vorteil, wenn eine Achse des fix mit dem Mauterfassungsgerät verbundenen orthogonalen Koordinatensystems bei bevorzugter Lage des Mauterfassungsgeräts als waagrechte Achse vorgegeben wird, wobei mittels des 3D-Beschleunigungsssensor eine Komponente der Erdbeschleunigung in Richtung dieser Achse bestimmt wird und wobei mittels der Ausgabeeinheit eine Änderung dieser Erdbeschleunigungskomponente infolge einer Lageänderung des Mauterfassungsgeräts angezeigt wird. Das Ausmaß eine Abweichung der Lageposition des Mauterfassungsgeräts von der bevorzugten Lage ist auf diese Weise besonders einfach feststellbar.

Bei einem alternativen Verfahren wird ebenfalls eine Achse des fix mit dem Mauterfassungsgerät verbundenen orthogonalen Koordinatensystems bei bevorzugter Lage des Mauterfassungsgeräts als waagrechte Achse vorgegeben. Zudem wird ein parallel zu dieser Achse ausgerichteter Vektor vorgegeben, wobei mittels des 3D-Beschleunigungsssensor eine Komponente dieses Vektors in Richtung der Erdbeschleunigung bestimmt wird und wobei mittels der Ausgabeeinheit eine Änderung dieser Vektorkomponente infolge einer Lageänderung des Mauterfassungsgeräts angezeigt wird.

Die Erfindung wird nachfolgend in beispielhafter Weise unter Bezugnahme auf die beigefügten Figuren erläutert. Es zeigen in schematischer Darstellung:

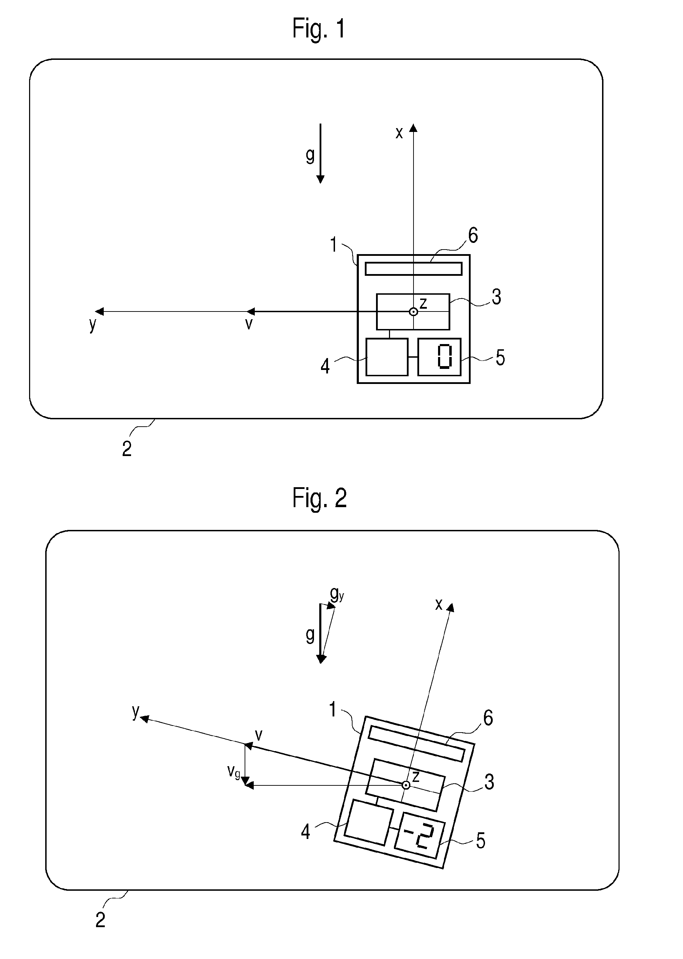

- Fig. 1: Mauterfassungsgerät in einer bevorzugten Lageposition
- Fig. 2: Mauterfassungsgerät in einer falschen Lageposition

Das Mauterfassungsgerät 1 ist beispielsweise mit Saugnäpfen lösbar an der Innenseite einer Frontscheibe 2 eines Kraftfahrzeugs befestigt. Es umfasst einen 3D-Beschleunigungssensor 3, eine GNSS-Antenne 6, eine Steuerung 4 und eine Ausgabeeinheit 5, die innerhalb eines gemeinsamen Gehäuses angeordnet sind.

Der 3D-Beschleunigungssensor 3 ist vorteilhafterweise so ausgerichtet, dass eine erste Achse x eines zugeordneten orthogonalen Koordinatensystems entlang der Frontscheibe 2 nach oben gerichtet ist, wenn sich das Mauterfassungssystem 1 in einer bevorzugten Lage befindet. Eine zweite Achse y verläuft dann orthogonal zur Richtung der Erdbeschleunigung g. Die zweiten Achse y eines richtig montierten Mauterfassungsgeräts 1 verläuft also horizontal, quer zur Fahrtrichtung des Kraftfahrzeugs.

In der Regel ist die bevorzugte Lageposition von der Ausrichtung der GNSS-Antenne abhängig. Diese erstreckt sich im dargestellten Beispiel in Richtung der zweiten Achse y. Sobald das Mauterfassungsgerät 1 aus seiner bevorzugten Lage geschwenkt wird, verändert sich auch die Lage des fix mit dem Mauterfassungsgerät 1 verbundenen Koordinatensystems, welches dem 3D-Beschleunigungssensor 3 zugeordnet ist.

Erfindungsgemäß zeigt das Mauterfassungsgerät 1 einem Benutzer an, ob sich das Mauterfassungsgerät 1 in Bezug auf die Richtung der Erdbeschleunigung g in einer bevorzugten Lage befindet. Genutzt wird dies zum Einrichten des Mauterfassungsgeräts 1 im still stehenden Kraftfahrzeug.

Sobald sich das Mauterfassungsgerät 1 an der Frontscheibe 2 des still stehenden Kraftfahrzeugs befindet, wird mittels 3D-Beschleunigungssensor 3 ausschließlich die Erdbeschleunigung g detektiert.

Die vom 3D-Beschleunigungssensor 3 ausgegebenen Daten geben die detektierte Erdbeschleunigung g in Bezug auf das zugeordnete Koordinatensystem an. Diese Daten sind der Steuerung 4 zugeführt und werden in ein geeignetes Ausgabesignal umgesetzt.

Vorzugsweise umfasst das Mauterfassungsgerät 1 eine Eingabevorrichtung, um das Mauterfassungsgerät 1 in einen eigenen Montagemodus zu versetzten. Dann ertönt beispielsweise ein akustisches Ausgabesignal so lange, bis sich das Mauterfassungsgerät 1 in der bevorzugten Lage befindet. Oder das Ausgabesignal ertönt für eine begrenzte Zeit, sobald sich das Mauterfassungsgerät 1 in der bevorzugten Lage befindet.

In entsprechender Weise ist ein optisches Ausgabesignal zur Anzeige der Lage des Mauterfassungsgeräts 1 verwendbar. Beispielsweise leuchtet eine LED so lange rot, bis sich das Mauterfassungsgerät 1 in der bevorzugten Lage befindet. Die richtige Lage kann dann zum Beispiel mittels einer grün leuchtenden LED angezeigt werden.

Solange der 3D-Beschleunigungssensor 3 eine Beschleunigung in Richtung der zweiten Achse y detektiert, befindet sich das Mauterfassungsgerät 1 nicht in der bevorzugten Lage. Die zweite Achse y verläuft dann nämlich nicht horizontal und die detektierte Erdbeschleunigung g weist eine Komponente g_{y} in Richtung der zweiten Achse y auf.

In einer bevorzugten Ausprägung zeigt die Ausgabeeinheit 5 an, in welchem Ausmaß die momentane Lage des Mauterfassungsgeräts 1 von der bevorzugten Lage abweicht. Dazu wird beispielsweise die Erdbeschleunigungskomponente g_{y} in Richtung der zweiten Achse y mittels der Steuerung 4 in einen entsprechenden Ausgabewert umgesetzt und mittels Ausgabeeinheit 5 angezeigt.

In einer anderen Ausprägung ist zur Ermittlung eines entsprechenden Ausgabesignals ein Vektor v festgelegt, welcher parallel zur zweiten Achse y verläuft. Während ein Benutzer die Lage des Mauterfassungsgeräts 1 einrichtet, wird mittels 3D-Beschleunigungssensor 3 laufend eine Komponente v_{g} dieses Vektors v in Richtung der Erdbeschleunigung g erfasst und an die Steuerung 4 gemeldet. Die Steuerung 4 setzt diese Daten in Werte um, welche mittels der Ausgabeeinheit 5 angezeigt werden. Erst wenn die Komponente v_{g} in Richtung der Erdbeschleunigung g verschwindet, befindet sich das Mauterfassungsgerät 1 in der bevorzugten Lage. Die Anzeigeeinheit zeigt dann beispielsweise den Wert Null an.

Eine Alternative sieht vor, dass mittels 3D-Beschleunigungssensor 3 direkt ein Neigungswinkel einer Koordinatenachse in Bezug auf die Richtung der Erdbeschleunigung g erfasst wird. Ein entsprechendes Datensignal wird mittels Steuerung 4 zu einem Anzeigewert verarbeitet, der mittels Ausgabeeinheit 5 angezeigt wird.

Vorteilhafterweise ist für die bevorzugte Lage ein Bereich festgelegt, innerhalb dem eine ordnungsgemäße Funktion des Mauterfassungsgeräts 1 sichergestellt ist. Konkret sind dabei für die einzelnen Lagedaten obere und untere Grenzen festgelegt.

In einer Weiterbildung ist mittels 3D-Beschleunigungssensor auch die Neigung der Frontscheibe 2 des Kraftfahrzeugs auswertbar. Dem Benutzer wird dann gegebenenfalls eine eingeschränkte Funktion des Mauterfassungsgeräts 1 angezeigt, wenn das Kraftfahrzeug eine zu steile oder eine zu flache Frontscheibe 2 aufweist. Dabei wird eine dritte Achse z des Koordinatensystems in Bezug auf die Richtung der Erdbeschleunigung g ausgewertet.

## Patentansprüche

1. Mauterfassungsgerät (1) eines satellitengestützten Mautsystems, welches als mobiles Gerät ausgebildet und in einem Kraftfahrzeug befestigbar ist und eine Steuerung (4) umfasst, **dadurch gekennzeichnet, dass** das Mauterfassungsgerät (1) einen 3D-Beschleunigungssensor (3) umfasst, welcher zur Erfassung der Erdbeschleunigung (g) eingerichtet ist, dass der 3D-Beschleunigungssensor (3) zur Übertragung von Daten mit der Steuerung (4) verbunden ist, dass die Steuerung (4) eingerichtet ist, um aus den Daten des 3D-Beschleunigungssensors (3) ein Ausgabesignal zu generieren, welches die Lage des Mauterfassungsgeräts (1) in Bezug auf die Richtung der Erdbeschleunigung (g) charakterisiert und dass die Steuerung (4) mit einer Ausgabeeinheit (5) zum Anzeigen einer bevorzugten Lage des Mauterfassungsgeräts (1) verbunden ist.

2. Mauterfassungsgerät (1) nach Anspruch 1, **dadurch gekennzeichnet, dass** die bevorzugte Lage des Mauterfassungsgeräts (1) durch die Position einer in dem Mauterfassungsgerät (1) eingebauten Antenne (6) bestimmt ist.

3. Mauterfassungsgerät (1) nach Anspruch 2, **dadurch gekennzeichnet, dass** die Antenne (6) eine DSRC-Antenne ist.

4. Mauterfassungsgerät (1) nach Anspruch 1 oder 2, **dadurch gekennzeichnet, dass** die Antenne (6) als zirkular polarisierte Patchantenne ausgebildet ist.

5. Mauterfassungsgerät (1) nach einem der Ansprüche 2 bis 4, **dadurch gekennzeichnet, dass** die bevorzugte Lage des Mauterfassungsgeräts (1) zudem durch die Position einer weiteren in dem Mauterfassungsgerät (1) eingebauten Antenne bestimmt ist.

6. Mauterfassungsgerät (1) nach einem der Ansprüche 1 bis 5, **dadurch gekennzeichnet, dass** das Mauterfassungsgerät (1) ein Befestigungselement umfasst, mittels dessen das Mauterfassungsgerät (1) lösbar an einer Frontscheibe (2) des Kraftfahrzeugs befestigbar ist.

7. Mauterfassungsgerät nach Anspruch 6, **dadurch gekennzeichnet, dass** das Befestigungselement als Saugnapf ausgebildet ist.

8. Mauterfassungsgerät nach einem der Ansprüche 1 bis 7, **dadurch gekennzeichnet, dass** ein mit dem Mauterfassungsgerät (1) fix verbundenes orthogonales Koordinatensystem festgelegt ist und dass der 3D-Beschleunigungssensor (3) der Steuerung (4) Daten dieses Koordinatensystems in Bezug auf die Erdbeschleunigung (g) übermittelt.

9. Mauterfassungsgerät nach Anspruch 8, **dadurch gekennzeichnet, dass** eine Achse (y) des orthogonalen Koordinatensystems bei bevorzugter Lage des Mauterfassungsgeräts (1) orthogonal zur Richtung der Erdbeschleunigung (g) ausgerichtet ist.

10. Verfahren zum Einrichten eines Mauterfassungsgeräts (1) in einem Kraftfahrzeug, **dadurch gekennzeichnet, dass** das Mauterfassungsgerät (1) nach einem der Ansprüche 1 bis 9 ausgebildet ist, dass mittels des 3D-Beschleunigungssensors (3) Lagedaten des Mauterfassungsgeräts (1) in Bezug auf die Richtung der Erdbeschleunigung (g) an die Steuerung (4) übermittelt werden und dass mittels Ausgabeeinheit (5) ein Ausgabesignal ausgegeben wird, anhand dem die Lage des Mauterfassungsgeräts (1) in Bezug auf die Richtung der Erdbeschleunigung (g) erkennbar ist.

11. Verfahren nach Anspruch 10, **dadurch gekennzeichnet, dass** eine Achse (y) des fix mit dem Mauterfassungsgerät (1) verbundenen orthogonalen Koordinatensystems bei bevorzugter Lage des Mauterfassungsgeräts (1) als waagrechte Achse vorgegeben wird, dass mittels des 3D-Beschleunigungsssensor (3) eine Komponente (g_{y}) der Erdbeschleunigung (g) in Richtung dieser Achse (y) bestimmt wird und dass mittels der Ausgabeeinheit (5) eine Änderung dieser Erdbeschleunigungskomponente (g_{y}) infolge einer Lageänderung des Mauterfassungsgeräts (1) angezeigt wird.

12. Verfahren nach Anspruch 10, **dadurch gekennzeichnet, dass** eine Achse (y) des fix mit dem Mauterfassungsgerät (1) verbundenen orthogonalen Koordinatensystems bei bevorzugter Lage des Mauterfassungsgeräts (1) als waagrechte Achse vorgegeben wird, dass zudem ein parallel zu dieser Achse (y) ausgerichteter Vektor (v) vorgegeben wird, dass mittels des 3D-Beschleunigungsssensor (3) eine Komponente (v_{y}) dieses Vektors (v) in Richtung der Erdbeschleunigung (g) bestimmt wird und dass mittels der Ausgabeeinheit (5) eine Änderung dieser Vektorkomponente (v_{y}) infolge einer Lageänderung des Mauterfassungsgeräts (1) angezeigt wird.
